# EUROPEAN PATENT APPLICATION

(11) **EP 4 502 366 A1**
(43) Date of publication of application: **05.02.2025**
(21) Application number: 22939766.6
(22) Date of filing: 22.09.2022
(51) Int. Cl.: F03D 15/10, F16D 3/20

(54) **FLOATING GEAR SET, SPEED CHANGE DEVICE AND WIND GENERATING SET**

(30) Priority: 28.04.2022 CN 202210460847
(71) Applicant: Beijing Goldwind Science & Creation Windpower Equipment Co. Ltd., Beijing 100176 (CN)
(72) Inventor: AI, Xiaolan, Beijing 100176 (CN); YANG, Yuliang, Beijing 100176 (CN); YANG, Chenglong, Beijing 100176 (CN); GAO, Si, Beijing 100176 (CN)
(74) Representative: Gulde & Partner
(86) International application number: PCT/CN2022/120474
(87) International publication number: WO 2023/206943

(57) **Abstract**

A floating gear set, a speed change device and a wind generating set, wherein the floating gear set comprises a self-aligning shaft assembly and two gears; two ends of the self-aligning shaft assembly in the axial direction are respectively inserted into the two gears; the self-aligning shaft assembly comprises a shaft body and a self-aligning member; the shaft body is in limit connection with the two gears in the circumferential direction by means of the self-aligning member; the shaft body radially swings, by means of the self-aligning member, relative to the two gears. According to the solution, the self-aligning shaft assembly can radially swing relative to the two gears, and in this way, the two gears can be misaligned with each other in the radial direction and can be in a connected state in which the two gears can float in the radial direction, so that a transmission path of a torque can be conveniently changed, so as to better realize torque distribution, and the torque density of a planetary gear mechanism can be improved especially when the solution is applied to the planetary gear mechanism..

## Description

This application claims the priority of the Chinese Patent Application No. 202210460847.2, titled "FLOATING GEAR SET, GEARBOX, AND WIND TURBINE", filed on April 28, 2022 with the China National Intellectual Property Administration, which is incorporated herein by reference in its entirety.

### FIELD

The present application relates to the technical field of a planetary gear mechanism, and in particular to a floating gear set, a gearbox and a wind turbine.

### BACKGROUND

A planetary gear mechanism is a common transmission mechanism, which is often used in a gearbox to transmit torque and change speed ratio. Compared with parallel shaft gear mechanism, the planetary gear mechanism has many advantages such as compact structure and high transmission efficiency.

In the planetary gear mechanism, except for the transmission structure of single planetary gear mechanism, there is also a double planetary gear structure, which includes two gears coaxially arranged and fixedly connected to each other. Although the double planetary gear is configured to be adapted to more complex planetary gear mechanisms, its fixed structure leads to an unadjustable torque transfer path, which is not conducive to torque distribution.

### SUMMARY

An object of the present application is to provide a floating gear set, which includes a self-aligning shaft assembly. The self-aligning shaft assembly is configured to swing radially relative to two gears.

In order to solve the above technical problems, a floating gear set is provided according to the present application, which includes a self-aligning shaft assembly and two gears. Two axial ends of the self-aligning shaft assembly are respectively inserted into the two gears, and the self-aligning shaft assembly includes a shaft body and a self-aligning member, and the shaft body is connected with the two gears in a position-limited manner in a circumferential direction through the self-aligning member, and the shaft body is also configured to swing radially relative to the two gears through the self-aligning member.

In the above solution, the self-aligning shaft assembly is configured to swing along the radial direction relative to the two gears, and the two gears of the floating gear set may be misaligned from each other along the radial direction and may be in a connection state in which the two gears float from each other in the radial direction, so that a transmission path of torque can be changed conveniently to well realize torque distribution, and torque density of the planetary gear mechanism can be improved, especially in case of being applied to the planetary gear mechanism.

In an embodiment, both of the two gears are respectively provided with insertion holes passing through in an axial direction, and an inner wall of the insertion hole of at least one of the gears is provided with an insertion groove extending in the axial direction; the self-aligning member is a plug-in part arranged corresponding to the insertion groove, and the insertion groove has a groove bottom wall, and a surface, facing away from the shaft body, of the plug-in part is at least partially in clearance fit with the groove bottom wall, and the shaft body is configured to deflect radially relative to the gear through the plug-in part.

In an embodiment, any of the two ends of the shaft body is provided with two plug-in parts, and the two plug-in parts at the same end are coaxially arranged with each other; a central axis of the two plug-in parts at the same end is a plug-in axis, a central axis of the shaft body is a main axis, and the plug-in axis is perpendicular to the main axis; the two plug-in axes at different ends are arranged at an included angle, and any of the two plug-in axes and the main axis form a swinging plane of the shaft body.

In an embodiment, a surface, facing away from the shaft body, of the plug-in part is a spherical surface, and the spherical surface abuts against the groove bottom wall or is in clearance fit with the groove bottom wall in the radial direction.

In an embodiment, the plug-in part includes an insertion post and a bushing, and, the insertion post and the shaft body have an integrated structure, or the insertion post is mounted on an outer wall surface of the shaft body, and the bushing is assembled outside the insertion post.

In an embodiment, the bushing is rotatably assembled with the insertion post.

In an embodiment, the bushing includes multiple split parts, and the multiple split parts are distributed around the insertion post.

In an embodiment, a cross section, perpendicular to the axial direction, of the outer wall surface of the insertion post arranged on at least one of the ends of the shaft body is circular, and the cross section, perpendicular to the axial direction, of the inner wall surface of the bushing is also circular; and/or, the cross section, perpendicular to the axial direction, of the outer wall surface of the insertion post arranged on at least one of the ends of the shaft body includes at least two line segments with different curvatures, and the inner wall surface of the bushing is sleeved outside and matched with the outer wall surface of the insertion post.

In an embodiment, the outer wall surface of the plug-in part includes two planar parts which are arranged opposite to each other, the inner wall surface of the insertion groove includes two groove side walls which are arranged opposite to each other, and the two planar parts of the plug-in part are configured to be contacted with the two groove side walls of the corresponding insertion groove in the circumferential direction.

In an embodiment, the insertion hole of at least one of the gears includes a small-diameter hole section and a large-diameter hole section, and the insertion groove is arranged in the small-diameter hole section.

In an embodiment, the self-aligning shaft assembly is connected with at least one of the two gears in the axial direction in a position-limited manner.

In an embodiment, the floating gear set further includes a clamping member, where the inner wall of the insertion hole of at least one of the gears is provided with two clamping grooves at intervals along the axial direction, and the two clamping grooves are provided with two clamping members respectively, so that the two clamping members assembled in the same gear form a limit connection with the plug-in part in the axial direction.

In an embodiment, radial dimensions of the two gears are different.

In an embodiment, one of the two gears with larger radial dimension is a big gear, and the big gear includes a hub part, an external teeth part and a rib part connecting the hub part and the external teeth part.

A gearbox is further provided according to the present application, which includes the floating gear set as described above.

A wind turbine is further provided according to the present application, which includes blades, a hub and a transmission mechanism, where the transmission mechanism includes the gearbox as described above.

### BRIEF DESCRIPTION OF THE DRAWINGS

FIG. 1 is a perspective view of a floating gear set provided according to the present application;
FIG 2 is a cross-sectional view of FIG. 1;
FIG. 3 is an exploded view of FIG. 1, showing a specific self-aligning shaft assembly;
FIG. 4 is a structural view showing a connection between a shaft body and an insertion post of FIG. 3;
FIG. 5 is a schematic structural view of a bushing shown in FIG. 3;
FIG. 6 is a perspective view of a big gear;
FIG. 7 is a cross-sectional view of FIG. 6;
FIG. 8 is a perspective view of a small gear;
FIG. 9 is a schematic diagram showing a principle of floating;
FIG. 10 is an exploded view of another specific self-aligning shaft assembly;
FIG. 11 is a schematic structural view of a split bushing.

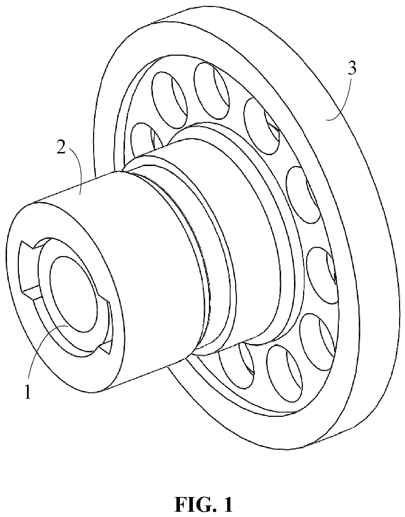

Reference numerals in FIG. 1 to FIG. 11 are listed as follows:
1 self-aligning shaft assembly, 11 shaft body, 12 plug-in part, 121 insertion post, 121a first top surface part, 121b outer peripheral surface part, 122 bushing, 122a split part, 122b planar part, 122c second top surface part, 122d inner peripheral surface part;
2 small gear;
3 big gear, 3a hub part, 3b external teeth part, 3c rib part, 31 insertion hole, 311 small-diameter hole section, 311a insertion groove, 311a-1 groove side wall, 312 large-diameter hole section, 313 clamping groove.

### DETAILED DESCRIPTION OF THE EMBODIMENTS

In order to enable those skilled in the art to better understand the technical solutions of the present application, the present application is further described in detail below with reference to the accompanying drawings and specific embodiments.

In the specification, "multiple" refers to a number of uncertain, usually more than two. In a cast that "multiple" is used for indicating the number of certain components, it does not mean the relationship between these components in number.

The terms "first" and "second" mentioned herein are only used to facilitate the description of two or more structures or components with the same or similar structure and/or function, and do not indicate some special restrictions on the order and/or importance.

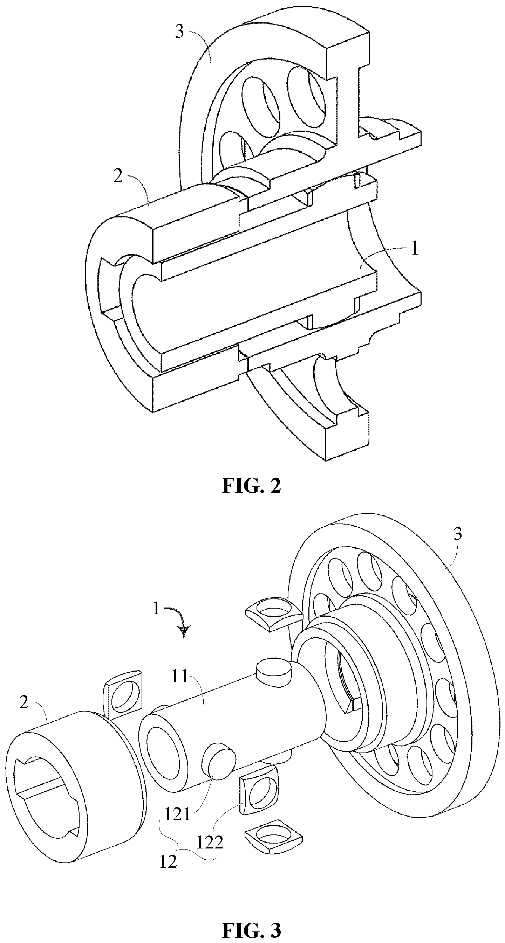

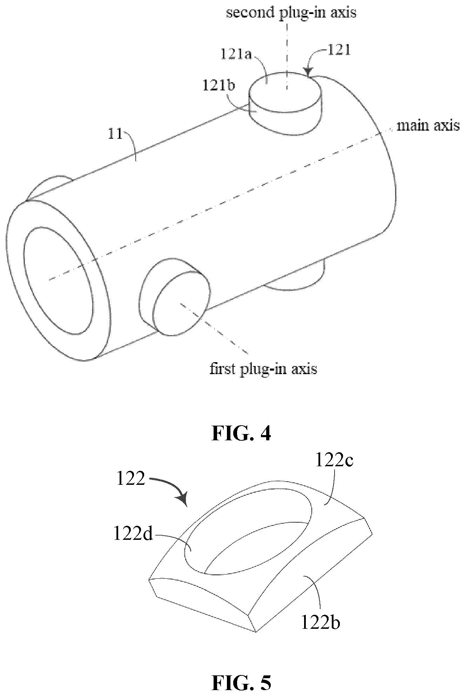

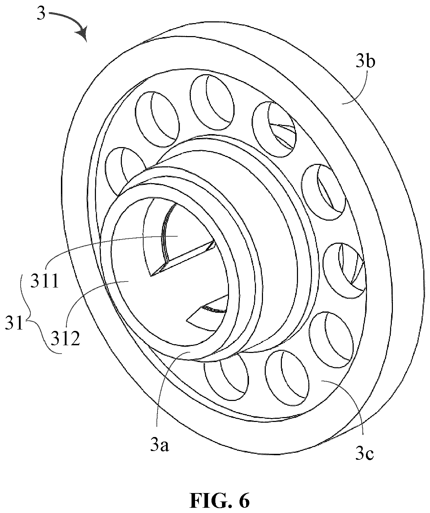

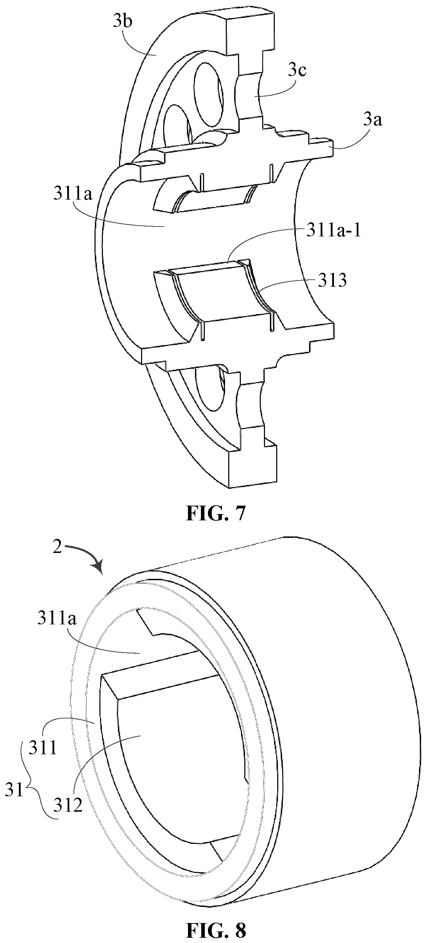

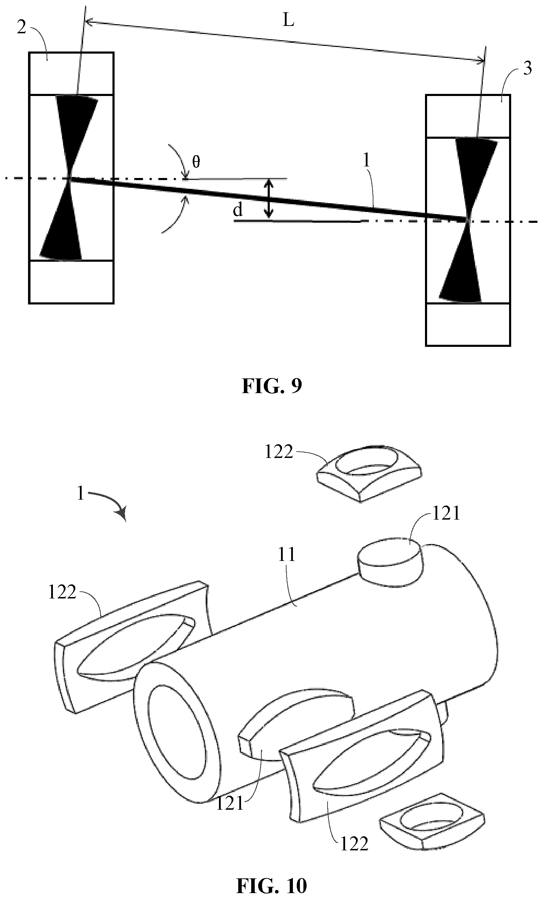

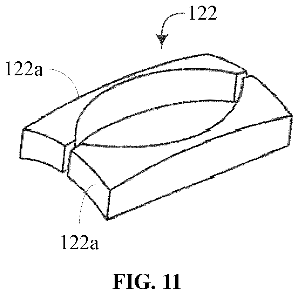

With reference to FIG. 1 to FIG. 11. FIG. 1 is a perspective view of a floating gear set provided according to the application, FIG. 2 is a cross-sectional view of FIG. 1, FIG. 3 is an exploded view of FIG. 1, showing a specific self-aligning shaft assembly, FIG. 4 is a structural view showing a connection between a shaft body and an insertion post of FIG. 3, FIG. 5 is a schematic structural view of a bushing shown in FIG. 3, FIG. 6 is a perspective view of a big gear, FIG. 7 is a cross-sectional view of FIG. 6, FIG. 8 is a perspective view of a small gear, FIG. 9 is a schematic diagram showing a principle of floating, FIG. 10 is an exploded view of another specific self-aligning shaft assembly, and FIG. 11 is a schematic structural view of a split bushing.

As shown in FIG. 1 and FIG. 2, a floating gear set is provided according to the present application, which includes a self-aligning shaft assembly 1 and two gears, and two axial ends of the self-aligning shaft assembly 1 are respectively inserted into the two gears, and the self-aligning shaft assembly 1 is connected with the two gears in a position-limited manner in a circumferential direction, so that the two gears can transmit torque through the self-aligning shaft assembly 1.

In this embodiment, the self-aligning shaft assembly 1 is not fixedly connected with the two gears. The self-aligning shaft assembly 1 includes a shaft body 11 and a self-aligning member, and the shaft body 11 can swing radially relative to the two gears through the self-aligning member. In this way, in a case that the self-aligning shaft assembly 1 is applied onto a planetary gear mechanism, the two gears may be misaligned from each other in a radial direction, and may be in a connection state in which the two gears float from each other in the radial direction, so that transmission path of the torque can be changed conveniently to better realize torque distribution, and the torque density of the planetary gear mechanism can be improved.

Here, the embodiment of the present application does not limit a connection manner between the shaft body 11 and the gear, which is specifically related to a structural form of the self-aligning member. In specific practice, the connection manner may be designed by those skilled in the art based on actual needs, as long as the shaft body can swing radially relative to the gear. For example, the self-aligning member may be a universal bearing, and the shaft body 11 may be provided with the universal bearing. Alternatively, the self-aligning member may also include a ball joint and a ball head, and the ball head may swing in the ball joint and may be located at an end of the shaft body 11.

In a specific embodiment, as shown in FIG. 3 to FIG. 8, both of the two gears may be provided with insertion holes 31 passing through an axial direction, and inner hole walls of the two gears may be provided with insertion grooves 311a extending along the axial direction. The self-aligning member may be a plug-in part 12, which may be located radially outside the shaft body 11. In a case that an end of the shaft body 11 is inserted into the corresponding insertion hole 31, the plug-in part 12 may be inserted into the corresponding insertion groove 311a.

The insertion groove 311a extending in the axial direction includes a groove bottom wall (not labeled in the drawing) and two groove side walls 311a-1, which are arranged to be opposite to each other in the circumferential direction. After assembly, the plug-in part 12 may contact with the two groove side walls 311a-1 in the circumferential direction to form a position-limited connection in the circumferential direction. In a case that the self-aligning shaft assembly 1 rotates, the plug-in part 12 may interact with the groove side walls 311a-1 to drive the corresponding gears to rotate, so as to realize the torque transmission between the two gears.

In order to reduce stress concentration between the plug-in part 12 and the groove side walls 311a-1, surfaces, in contact with the two groove side walls 311a-1, of the plug-in part 12 may be planar parts 122b. In this way, contact areas between the plug-in part 12 and the groove side walls 311a-1 may be relatively large, and a possibility that the plug-in part 12 and the gears are damaged in the torque transmission process can be decreased.

In some embodiments, the plug-in part 12 only includes an insertion post 121, so that the aforementioned planar part 122b is arranged to the insertion post 121.

In other embodiments, the plug-in part 12 includes both the insertion post 121 and the bushing 122, and the insertion post 121 and the shaft body 11 may be integrally formed to facilitate manufacturing. Alternatively, the insertion post 121 and the shaft body 11 may be manufactured separately from each other, and then the insertion post 121 may be mounted on an outer wall surface of the shaft body 11 by multiple connection methods such as welding, bonding, screw connection and the like. The bushing 122 may be mounted outside the insertion post 121. In this embodiment, the plug-in part 12 may be in contact with the groove side walls 311a-1 of the insertion groove 311a through the bushing 122, which can avoid direct wear of the insertion post 121. In this way, even if serious wear occurs, only the bushing 122 is seriously worn, so it is only necessary to replace the bushing 122, without replacing the self-aligning shaft assembly 1 as a whole, so that replacement cost can be relatively low.

In practice, material of the bushing 122 may further be selected such that the wear resistance of the bushing 122 is weaker than that of the insertion post 121 and the gear. In this way, the wear on the insertion post 121 and the gear can be reduced through the wear of the bushing 122.

The embodiment in which the plug-in part 12 includes the insertion post 121 and the bushing 122 is taken as an example. As shown in FIG. 5, the aforementioned planar part 122b may be arranged to the bushing 122, and the number of the planar part 122b may be two, and two planar parts 122b may be arranged opposite to each other along the circumferential direction of the shaft body 11 so as to contact with the two groove side walls 3 11a-1 respectively, and then transmit the torsional force.

In the outer peripheral wall of the bushing 122, in addition to the above-mentioned two planar parts 122b, two surface parts connecting the two planar parts 122b are further provided, specific structural forms of these two surface parts are not limited here, and those skilled in the art can determine the specific implementation based on actual needs. In the embodiment of the drawing, as shown in FIG. 5, the surface part connecting the two planar parts 122b is also a flat surface. In this case, cross section of the outer wall surface of the bushing 122 perpendicular to the axial direction may be in a shape of rectangular or parallelogram. Indeed, the surface part connecting the two planar parts 122b may also be an arc surface part or a curved surface part with other shapes, which does not affect the realization of core function of the bushing 122.

The outer wall surface of the insertion post 121 is in contact with the inner wall surface of the bushing 122, so that the shaft body 11 transmits torsional force to the bushing 122 through the insertion post 121. Here, the embodiment of the present application does not limit the structural shapes of the outer wall surface of the insertion post 121 and the inner wall surface of the bushing 122. In specific practice, those skilled in the art can arrange them based on actual needs, as long as they can meet the requirements of use. Generally speaking, the cross section, perpendicular to the axial direction, of the outer wall surface of the insertion post 121 and the cross section, perpendicular to the axial direction, of the inner wall surface of the bushing 122 can be matched with each other, that is, their shapes can be basically the same, which facilitates a good contact between the outer wall surface of the insertion post 121 and the inner wall surface of the bushing 122. In actual manufacturing process, a situation that the shapes of the outer wall surface of the insertion post 121 and the inner wall surface of the bushing 122 are not matched with each other is also allowed. This mismatch includes a slight mismatch caused by manufacturing accuracy and tolerance, and also includes deliberate shape difference, such as the cross section of the outer wall surface of the insertion post 121 perpendicular to the axial direction is circular, while the cross section, perpendicular to the axial direction, of the inner wall surface of the bushing 122 is square. After assembly, the insertion post 121 can swing relative to the bushing 122 within a certain angle range, so that a swing direction of the shaft body 11 relative to the gear includes a direction around a central axis of the insertion post 121.

For convenience of description, the outer wall surface of the insertion post 121 may be called the outer peripheral surface part 121b, and the inner wall surface of the bushing 122 may be called the inner peripheral surface part 122d.

In an embodiment, as shown in FIG. 3 to FIG. 5, the cross section, perpendicular to the axial direction, of the outer peripheral surface part 121b may be circular, and the cross section, perpendicular to the axial direction, of the inner peripheral surface part 122d may also be circular. In this embodiment, in a case that the shaft body 11 is inserted into the corresponding insertion groove through the insertion post 121 and the bushing 122, the shaft body 11 can easily swing relative to the bushing 122.

With reference to FIG. 10, in another embodiment, the cross section, perpendicular to the axial direction, of the outer peripheral surface part 121b may include at least two line segments with different curvatures, and the cross section, perpendicular to the axial direction, of the inner peripheral surface part 122d may also include at least two line segments with different curvatures. In this embodiment, due to mutual constraint of the outer peripheral surface part 121b and the inner peripheral surface part 122d, the shaft body 11 has relatively small freedom to swing relative to the bushing 122. However, in this embodiment, the contact area between the outer peripheral surface part 121b and the inner peripheral surface part 122d is increased, which decreases the stress concentration between them.

In the latter embodiment, the structural shapes of the outer peripheral surface part 121b and the inner peripheral surface part 122d may be various, for example, the cross sections, perpendicular to the axial direction, of the outer peripheral surface part 121b and the inner peripheral surface part 122d may be square, oval or other special shapes. In the solution shown in FIG. 10, the outer peripheral surface part 121b is composed of two curved surfaces and two flat surfaces.

In an embodiment of the floating gear set provided according to the present application, the outer peripheral surface part 121b of the insertion post arranged at any of the two ends of the shaft body 11 is circular (see FIG. 4) or oval. In another embodiment, the outer peripheral surface part of the outer peripheral surface part 121b of the insertion post arranged at one end of the shaft body 11 is circular, and the outer circumferential surface part of the insertion post arranged at the other end is oval (see FIG. 10).

The bushing 122 may be a one-piece structure.

Alternatively, the bushing 122 may also have a split structure, in which case, the bushing 122 may include multiple split parts 122a, and the split parts 122a may be distributed around the insertion post 121. The number of the split parts 122a is not limited here, and in practice, the skilled in the art can adjust it based on the actual needs, as long as it can meet the use requirements. In the embodiment of FIG. 11, the number of the split parts 122a may be two, and the two split parts 122a can be arranged opposite to each other along the circumferential direction of the shaft body 11, so that in a case that the bushing 122 is assembled in the insertion groove 311a, the bushing 122 is not easy to fall off even if other fixing structural members are not provided.

A surface, facing away from the shaft body 11, of the plug-in part 12 may be a spherical surface, so that the shaft body 11 can swing radially in a plane where the central axis of the plug-in part 12 (also the central axis of the insertion post 121) is located. The spherical surface may specifically include a first top surface part 121a of the insertion post 121 and a second top surface part 122c of the bushing 122, that is, both the first top surface part 121a and the second top surface part 122c can be the spherical surface. The spherical surface and the groove bottom wall can abut against each other to form a line contact or point contact, or can be in clearance fit.

The embodiment in which the surface, facing away from the shaft body 11, of the plug-in part 12 may be the spherical surface is only an example to realize the swing of the shaft body and the gear in the radial direction. In the present application, the shaft body 11 may also swing radially relative to the gear in the plane where the central axis of the plug-in part 12 is located though an embodiment in which the surface, facing away from the shaft body 11, of the plug-in part 12 is a non-spherical surface. At this time, the non-spherical surface and the bottom wall of the groove can be at least partially in clearance fit with each other to avoid interference with the swing of the shaft body 11.

Any of the two ends of the shaft body 11 may be provided with one or two plug-in parts 12. In the embodiment shown in the drawing, any of the two ends of the shaft body 11 may be provided with two plug-in parts 12, and the two plug-in parts 12 may be inserted and assembled in two insertion grooves 311a, which facilitates the stability of torque transmission between the self-aligning shaft assembly 1 and the gear.

For example, in a case that any of the two ends of the shaft body 11 is provided with two plug-in parts 12, the two plug-in parts 12 at the same end may be coaxially arranged to form a plug-in axis at this end. The central axis of the shaft body 11 is called the main axis, and the plug-in axis is perpendicular to the main axis. In this way, the shaft body 11 is able to swing radially in a plane where the insertion axis and the main axis are located.

For the convenience of distinguishing, as shown in FIG. 4, plug-in axes at the two ends of the shaft body 11 may be called a first plug-in axis and a second plug-in axis respectively, and the first plug-in axis and the second plug-in axis may be arranged at an included angle with each other. In this way, the shaft body 11 is able to swing in two different planes (a plane in which the first plug-in axis and the main axis are located, and a plane in which the second plug-in axis and the main axis are located), so that more swing directions may be provided, and correspondingly, the two gears may float in more radial directions.

The included angle between the first plug-in axis and the second plug-in axis is not limited here. As an illustrative example, the first plug-in axis and the second plug-in axis may be perpendicular to each other.

The insertion hole 31 of the gear may be an equal-diameter hole, and the aforementioned insertion groove 311a is arranged at the inner hole wall of the equal-diameter hole, so that the outer wall surface of the shaft body 11 and the inner wall surface of the insertion hole 31 may be in clearance fit or transition fit with each other to adapt to the radial swing of the shaft body 11. Alternatively, the insertion hole 31 of at least one of the two gears may be a non-equal diameter hole, which may include a small-diameter hole section 311 and a large-diameter hole section 312, and the insertion groove 311a may be arranged in the small-diameter hole section 311. In this way, the weight of the gear can be lighter, which facilitates the lightweight design of the whole planetary gear mechanism. The outer wall surface of the shaft body 11 and the inner wall surface of the small-diameter hole section 311 may be in clearance fit or transition fit with each other to adapt to the radial swing of the shaft body 11.

At least one of the two gears may further be connected with the self-aligning shaft assembly 1 in the axial direction in the position-limited manner, so as to avoid the separation of the self-aligning shaft assembly 1 from the gears, and further facilitate the integral assembly of the floating gear set. Also, in practice, other structural members in the planetary gear mechanism may further be used to ensure the axial assembly position of the two gears and the self-aligning shaft assembly 1. In this case, there is no need to provide an axial limit connection structure for the gear and the self-aligning shaft assembly 1. Specifically, in the embodiment of the present application, the structure of the floating gear set is explained by taking the former manner as an example.

The insertion groove 311a provided in the small-diameter hole section 311 is taken as an example. The insertion groove 311 a may pass through the small-diameter hole section 311 in the axial direction, and this solution can be seen in FIG. 6. Alternatively, the insertion groove 311a may not pass through the whole small-diameter hole section 311 in the axial direction, and in this case, the inner wall surface of the insertion groove 311a may further include an axial end wall, which may cooperate with the plug-in part 12 to limit the axial assembly position of the self-aligning shaft assembly 1 in one direction. In this way, the number of axial limiting members can be reduced.

With reference to FIG. 7, in the embodiment shown in the drawing, the insertion groove 311a is a through-design. At this time, the floating gear set provided according to the present application may further include a clamping member (not shown in the drawing). As shown in FIG. 7, the inner hole wall of one of the gears may be provided with two clamping grooves 313 at intervals along the axial direction, and the two clamping grooves 313 may be provided with two clamping members respectively, and the two clamping members assembled on the same gear form an axial limit connection with the plug-in part 12 to establish the assembly connection between the shaft body 11 and the gear.

Any of the two gears may be provided with the above-mentioned clamping groove 313, or only one of the two gears may be provided with the above-mentioned clamping groove 313.

In specific application, radial dimensions of the two gears are different. For convenience of description, the two gears may be called a small gear 2 and a big gear 3 respectively. Due to its large radial dimension, the big gear 3 may include a hub part 3a, an external teeth part 3b and a rib part 3c connecting the hub part 3a and the external teeth part 3b. The hub part 3a may be used to connect bearings to define the axial assembly position of the big gear 3, and the rib part 3c may be used to improve connection strength.

With reference to FIG. 9, in the floating gear set provided according to the embodiment of the present application, the two gears may be misaligned from each other in the radial direction under the action of the self-aligning shaft assembly 1. In this way, in a case that the two gears are subjected to tangential force, the two gears may swing radially, and swing angle θ depends on a swing amount d and an axial span d of the plug-in part 12, and the relationship among them is as follows: tan θ = d/L.

A gearbox is further provided according to the embodiment of the present application, which includes the floating gear set as described above. For example, the gearbox has a planetary gear train, and the planetary gear train also includes the floating gear set as described above. Since the above-mentioned floating gear set already has the above-mentioned technical effects, the gearbox with the floating gear set should also have similar technical effects, which will not be repeated here again.

Further, a wind turbine is further provided according to the embodiment of the present application, which includes blades, a hub and a transmission mechanism, where the hub is configured to be connected with the transmission mechanism, and the transmission mechanism includes the gearbox as described above. That is to say, the gearbox can be applied to the wind turbine. Also, the gearbox is not limited to be applied to the wind turbine , and it can be applied to any scene that requires a transmission mechanism.

It should be noted that the descriptions above are merely preferred embodiments of the present application, and a person of ordinary skill in the art may make various improvements and modifications without departing from the spirit of the present application. All such improvements and refinements shall fall within the protection scope of the present application.

## Claims

1. A floating gear set, comprising a self-aligning shaft assembly (1) and two gears, wherein two axial ends of the self-aligning shaft assembly (1) are respectively inserted into the two gears, and the self-aligning shaft assembly (1) comprises a shaft body (11) and a self-aligning member, and, the shaft body (11) is connected with the two gears in a position-limited manner in a circumferential direction through the self-aligning member, and the shaft body (11) is configured to swing radially relative to the two gears through the self-aligning member.

2. The floating gear set according to claim 1, wherein both of the two gears are respectively provided with insertion holes (31) passing through an axial direction, and an inner wall of the insertion hole of at least one of the gears is provided with an insertion groove (311a) extending in the axial direction; the self-aligning member is a plug-in part (12) arranged corresponding to the insertion groove, and the plug-in part (12) is located radially outside the shaft body (11) and is inserted into the insertion groove (311a); the insertion groove (311a) includes a groove bottom wall, and, a surface, facing away from the shaft body (11), of the plug-in part (12) is at least partially in clearance fit with the groove bottom wall, and the shaft body (11) is configured to swing radially relative to the gear in the radial direction through the plug-in part (12).

3. The floating gear set according to claim 2, wherein any of the two ends of the shaft body (11) is provided with two plug-in parts (12), and the two plug-in parts (12) at the same end are coaxially arranged with each other; a central axis of the two plug-in parts (12) at the same end is a plug-in axis, a central axis of the shaft body (11) is a main axis, and the plug-in axis is perpendicular to the main axis; the two plug-in axes at two different ends are arranged at an included angle, and any of the two plug-in axes and the main axis form a swinging plane of the shaft body (11).

4. The floating gear set according to claim 3, wherein a surface, facing away from the shaft body (11), of the plug-in part (12) is a spherical surface, and the spherical surface abuts against the groove bottom wall or is in clearance fit with the groove bottom wall in the radial direction.

5. The floating gear set according to claim 2, wherein the plug-in part (12) comprises an insertion post (121) and a bushing (122), the insertion post (121) and the shaft body (11) have an integrated structure, or the insertion post (121) is mounted on an outer wall surface of the shaft body (11), and the bushing (122) is assembled outside the insertion post (121).

6. The floating gear set according to claim 5, wherein the bushing (122) is rotatably assembled with the insertion post (121).

7. The floating gear set according to claim 6, wherein the bushing (122) comprises a plurality of split parts (122a), and the plurality of split parts (122a) are distributed around the insertion post (121).

8. The floating gear set according to claim 6, wherein a cross section, perpendicular to the axial direction, of the outer wall surface of the insertion post (121) arranged on at least one of the ends of the shaft body (11) is circular, and the cross section, perpendicular to the axial direction, of the inner wall surface of the bushing (122) is also circular; and/or,
the cross section, perpendicular to the axial direction, of the outer wall surface of the insertion post (121) arranged on at least one of the ends of the shaft body (11) comprises at least two line segments with different curvatures, and the inner wall surface of the bushing (122) is mounted on the outer wall surface of the insertion post (121).

9. The floating gear set according to claim 2, wherein the outer wall surface of the plug-in part (12) comprises two planar parts (122b) arranged opposite to each other, the inner wall surface of the insertion groove (311a) comprises two groove side walls (311a-1) arranged opposite to each other, and the two planar parts (122b) of the plug-in part (12) are configured to be in contact with the two groove side walls (31 1a-1) of the corresponding insertion groove (311a) respectively in the circumferential direction.

10. The floating gear set according to any of claims 2 to 9, wherein the insertion hole (31) of at least one of the gears comprises a small-diameter hole section (311) and a large-diameter hole section (312), and the insertion groove (311a) is arranged in the small-diameter hole section (311).

11. The floating gear set according to any one of claims 2 to 9, wherein the self-aligning shaft assembly (1) is connected with at least one of the two gears in the axial direction in a position-limited manner.

12. The floating gear set according to claim 11, further comprising a clamping member, wherein the inner wall of the insertion hole of at least one of the gears is provided with two clamping grooves (313) at intervals in the axial direction, and the two clamping grooves (313) are provided with two clamping members respectively, so that the two clamping members assembled in the same gear form a limit connection with the plug-in part (12) in the axial direction.

13. The floating gear set according to any one of claims 1 to 9, wherein radial dimensions of the two gears are different.

14. The floating gear set according to claim 13, wherein one of the two gears with larger radial dimension is a big gear (3), and the big gear (3) comprises a hub part (3a), an external teeth part (3b) and a rib part (3c) connecting the hub part (3a) and the external teeth part (3b).

15. A gearbox, comprising the floating gear set according to any one of claims 1 to 14.

16. A wind turbine, comprising blades, a hub and a transmission mechanism, wherein the transmission mechanism comprise the gearbox according to claim 15.
